# EUROPÄISCHE PATENTSCHRIFT

(11) **EP 3 048 498 B1**
(45) Veröffentlichungstag und Bekanntmachung des Hinweises auf die Patenterteilung: **27.06.2018**
(21) Anmeldenummer: 15152197.8
(22) Anmeldetag: 22.01.2015
(51) Int. Cl.: G05B 19/042

(54) **Verfahren zum Auslesen von Diagnosedaten aus einer Sicherheitssteuerung**
Method for reading diagnostic data from a safety control device
Procédé de lecture de données de diagnostic provenant d'une commande de sécurité

(43) Veröffentlichungstag der Anmeldung: 27.07.2016
(73) Patentinhaber: Wieland Electric GmbH, 96052 Bamberg (DE)
(72) Erfinder: Sofsky, Christof, 97483 Eltmann (DE)
(74) Vertreter: 2K Patentanwälte Blasberg Kewitz & Reichel

(56) Entgegenhaltungen:
- DE-A1- 10 313 467
- DE-A1-102008 032 823
- DE-A1-102008 060 011
- "intelligenter produzieren, Die Wissensplattform für das technische Management, Wireless Automation - drahtlos gesteuert und geregelt", , 31. Dezember 2009 (2009-12-31), Seiten 1-31, XP55204426, Gefunden im Internet: URL:http://www.vdma-verlag.com/home/res/pr odukte/ip_04_2009.pdf [gefunden am 2015-07-23]

## Beschreibung

Die Erfindung betrifft ein Verfahren zum Auslesen von Diagnosedaten aus einer Sicherheitssteuerung mittels einer mobilen Datenverarbeitungseinheit, wobei die Sicherheitssteuerung zum sicheren Ein- und Ausschalten eines elektrischen Verbrauchers, der Gefahrenpotential für Mensch und Material birgt, gemäß einer Sicherheitsanforderungsstufe in einer Norm ausgelegt ist.

Sicherheitssteuerungen, wie sie dem Fachmann z.B. aus der DE 10 2008 032823 A1 bekannt sind, werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge der Sicherheitssteuerung gesteuert, die zur Erfüllung der einschlägigen Sicherheitsvorschriften und -normen ausgelegt ist. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von Schalteingängen und -ausgängen zum Anschluss der Arbeitskontakte eines Meldeelements auf. Das Meldeelement kann z.B. ein Not-Aus-Schalter sein, eine Positions- oder Stellungsüberwachung z.B. einer Schutztür, eine Lichtschranke, eine Schaltmatte etc. Das Meldeelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Meldeelement nicht mehr in der Position "sicher" ist.

Sicherheitssteuerungen sind häufig auch modular aufgebaut, so dass mehrere, unterschiedlich geartete Meldeelemente angeschlossen werden können. Weiterhin können so auch mehrere elektrische Verbraucher gezielt angesteuert werden. Neben der Überwachung der Schaltstellung der Meldeelemente ist dabei eine ständige Funktionsüberprüfung der Sicherheitssteuerung erforderlich, um die genannten Sicherheitsvorschriften und -normen zu erfüllen. Für besonders hohe Sicherheitsstufen umfasst dies auch eine ständige Prüfung der Verkabelung der angeschlossenen Meldeelemente.

Im Rahmen der Wartung derartiger Sicherheitssteuerung ist es erforderlich, Diagnosedaten aus der Sicherheitssteuerung auszulesen. Dies erfolgt bislang entweder mittels eines auf der Sicherheitssteuerung angeordneten Displays, welches vom Servicetechniker abgelesen wird, oder aber per mitzuführendem mobilem Personalcomputer, der über eine meist je nach Hersteller proprietäre Kabelverbindung an die Sicherheitssteuerung angeschlossen wird.

Es ist daher Aufgabe der Erfindung, ein Verfahren zum Auslesen von Diagnosedaten aus einer Sicherheitssteuerung der eingangs genannten Art anzugeben, welches ohne spezielle Hardware auskommt und zudem einfacher durchzuführen ist.

Diese Aufgabe wird erfindungsgemäß dadurch gelöst, dass die Diagnosedaten von der Sicherheitssteuerung an die mobile Datenverarbeitungseinheit mittels einer drahtlosen Verbindung übertragen werden und die drahtlose Verbindung nach dem NFC-Übertragungsstandard ausgelegt ist.

Die Erfindung geht dabei von der Überlegung aus, dass eine einfacher durchzuführende Diagnose ohne spezielle Hardware dadurch erreichbar wäre, dass auf herstellerspezifische, proprietäre Kabelverbindungen verzichtet werden könnte. Allerdings sind auch die - ohne Verkabelung auskommenden - bisher verwendeten Displays zu unflexibel und aufgrund der geringen Größe von Sicherheitssteuerungen schlecht ablesbar. Besonders einfach ist die Vereinfachung daher erreichbar, indem auf Kabelverbindungen vollständig verzichtet wird und stattdessen die Diagnosedaten über eine drahtlose Verbindung an eine mobile Datenverarbeitungseinheit wie z.B. ein Tablet oder Smartphone übertragen werden. Hierbei hat sich überraschend herausgestellt, dass trotz der hohen Anforderungen an die Elektromagnetische Verträglichkeit (EMV), die von den eingangs genannten Normen üblicherweise verlangt wird, und die bislang den Fachmann von der Verwendung von Funkverbindungen im Bereich von Sicherheitssteuerungen allgemein absehen ließ, eine derartige drahtlose Übertragung im Rahmen der Diagnose und Wartung möglich ist.

Darüber hinaus ist die drahtlose Verbindung nach dem NFC-(Near Field Communication-)Übertragungsstandard ausgelegt, d.h. es wird eine NFC-Funkverbindung zwischen Sicherheitssteuerung und mobiler Datenverarbeitungseinheit hergestellt. Über diese werden die Diagnosedaten übertragen. Eine NFC-Verbindung bietet grade vordem Hintergrund der genannten EMV-Anforderungen bei Sicherheitssteuerungen bereits durch die geringe Reichweite von nur etwa 10 cm besondere Vorteile. Weiterhin wurde erkannt, dass der bei der NFC-Übertragung verwendete Frequenzbereich von 13,56 MHz für die in Sicherheitssteuerungen verwendete Technik hinsichtlich der EMV-Anforderungen unproblematisch ist. Zudem bietet NFC die Möglichkeit einer sicheren Übertragung von Daten, die gerade im Bereich von Sicherheitssteuerungen, die aufgrund der Gefahr der üblicherweise angeschlossenen Verbraucher gegen Manipulation geschützt werden müssen, besonders wichtig ist.

Hierbei erfolgt weiterhin vorteilhafterweise vor der Übertragung der Diagnosedaten eine Authentifizierung der mobilen Datenverarbeitungseinheit an der Sicherheitssteuerung. Diese kann beispielsweise durch eine in der mobilen Datenverarbeitungseinrichtung hinterlegte Kennung erreicht werden. In der Sicherheitssteuerung könnte eine Liste vertrauenswürdiger Kennungen hinterlegt werden. Bei der NFC-Verbindung kann hierbei eine Personalisierung der jeweiligen mobilen Datenverarbeitungseinheit eine erste Authentifizierung bieten. Alternativ könnten z.B. auch Passwörter an der mobilen Datenverarbeitungseinheit für eine Abfrage der Diagnosedaten einzugeben sein, die dann in der Sicherheitssteuerung überprüft werden.

Die auslesbaren Diagnosedaten können vielfältiger Natur sein. Sicherheitssteuerungen sind häufig für verschiedene Anwendungen und - bei modularem Aufbau - verschiedene Anordnungen und Auswahlen von Modulen programmierbar, wobei die Programmierung beispielsweise an einem PC extern erstellt werden kann. Das auf diese Weise entstandene Steuerungsprogramm wird dann in einen Speicher der Sicherheitssteuerung übertragen. Um die Integrität des Steuerungsprogramms zu überprüfen, kann vorteilhafterweise bei der Wartung ausgelöst oder kontinuierlich eine Prüfsumme des in dem Speicher hinterlegten Steuerungsprogrammes gebildet werden, d.h. ein Wert, der aus den Bitdaten des Steuerungsprogramms berechnet wird und in der Lage ist, mindestens einen Bitfehler in den Daten zu identifizieren. Derartige Prüfsummen werden bei heute bekannten Verfahren beispielsweise auf einem Display an der Steuerungseinrichtung dargestellt, was bei der Länge der Prüfsumme zu einer kleinen Darstellung führt und somit zu sicherheitskritischen Ablesefehler. Beim vorliegenden Verfahren wird die Prüfsumme vorteilhafterweise Bestandteil der Diagnosedaten und über die drahtlose Verbindung an die mobile Datenverarbeitungseinheit übertragen.

In weiterer vorteilhafter Ausgestaltung wird während des Betriebs der Sicherheitssteuerung ein Ereignisprotokoll der Sicherheitssteuerung gebildet, welches ebenfalls Bestandteil der Diagnosedaten wird. Ein derartiges Ereignisprotokoll kann beispielsweise in digitaler tabellarischer Form in der Sicherheitssteuerung angelegt werden und zeichnet Ereignisse im laufenden Betrieb anhand ihres Zeitpunkts auf, wie z.B. Ein- und Ausschaltzeitpunkte etc.

In noch weiterer vorteilhafter Ausgestaltung werden während des Betriebs der Sicherheitssteuerung mit einer Funktionsstörung der Sicherheitssteuerung assoziierte Daten gebildet, welche ebenfalls Bestandteil der Diagnosedaten werden. Eine Funktionsstörung führt aufgrund der Sicherheitsrelevanz in der Regel zur sicherheitsgerichteten Abschaltung der Sicherheitssteuerung. Derartige mit der Funktionsstörung assoziiere Daten können beispielsweise die Ursache und der Zeitpunkt dieses Abschaltens sein, d.h. ob und wann ein Fehler in der Sicherheitssteuerung im Rahmen der Redundanzprüfung erkannt wurde und wenn ja, in welchem Schaltkreis.

Die bereits genannte Norm, nach der die im beschriebenen Verfahren verwendete Sicherheitssteuerung ausgebildet ist, ist vorteilhafterweise die IEC 61508, eine Nachfolgenorm oder eine Implementierung dieser Norm. Derartige Normen geben dem Fachmann konkrete technische Ausgestaltungen vor und definieren verschiedene Sicherheitsanforderungsstufen (Safety Integrity Level, SIL), die als Maß für die Wirksamkeit der Sicherheitsfunktionen dienen.

Ein Computerprogrammprodukt, welches direkt in den internen Speicher einer mobilen Datenverarbeitungseinheit geladen werden kann, umfasst vorteilhafterweise Softwarecodeabschnitte, die, wenn sie auf der mobilen Datenverarbeitungseinheit ausgeführt werden, diese zum Zusammenwirken in dem beschriebenen Verfahren ertüchtigen.

Dieses Computerprogrammprodukt ist vorteilhafterweise in den internen Speicher einer mobilen Datenverarbeitungseinheit mit einem derartigen internen Speicher und einem Modul, welches zur Herstellung einer drahtlosen Verbindung ausgelegt ist, geladen. Hierdurch ist die mobile Datenverarbeitungseinheit geeignet, um eine Kommunikationsverbindung mit einer Sicherheitsteuerung aufzubauen und Diagnosedaten zu empfangen.

Die mobile Datenverarbeitungseinheit ist vorteilhafterweise ein Smartphone. Smartphones sind heute weitverbreitet, so dass keine zusätzliche Hardware erforderlich ist. Smartphones verfügen in der Regel auch über genügend Rechenleistung und auch entsprechende Kommunikationssysteme, insbesondere auch NFC, um die Verbindung zur Sicherheitssteuerung aufzubauen. Hier genügt es, ein oben beschriebenes Computerprogrammprodukt, hier in Form einer App auf das Smartphone zu laden, um das beschriebene Verfahren an einer entsprechend ausgerüsteten Sicherheitssteuerung durchführen zu können.

Eine Sicherheitssteuerung, die zum sicheren Ein- und Ausschalten eines elektrischen Verbrauchers gemäß einer Sicherheitsanforderungsstufe in einer Norm ausgelegt ist, umfasst vorteilhafterweise eine Steuereinheit, ausgelegt zur Erstellung von Diagnosedaten, und ein Modul, welches zur Herstellung einer drahtlosen Verbindung ausgelegt ist, und ist weiterhin zum Zusammenwirken in dem beschriebenen Verfahren ausgelegt. Das Modul kann dabei auch in der Steuereinheit integriert sein.

Die mit der Erfindung erzielten Vorteile bestehen insbesondere darin, dass durch die Verwendung von drahtloser Kommunikation in Form einer NFC-Verbindung zur Übertragung von Diagnosedaten aus einer Sicherheitssteuerung eine besonders einfache und sichere Möglichkeit zur Wartung von Sicherheitssteuerungen geboten wird, ohne dass die Elektromagnetische Verträglichkeit beeinflusst wird. Die Beschränkung der drahtlosen Kommunikation auf Diagnosedaten bietet dabei eine zusätzliche Sicherheit vor der Beeinflussung durch Dritte, da die sicherheitsrelevanten Funktionen nicht beeinträchtigt werden.

Ein Ausführungsbeispiel wird anhand einer Zeichnung näher erläutert. Darin zeigt die einzige

FIG eine Sicherheitssteuerung und eine mobile Datenverarbeitungseinheit beim Wartungsvorgang.

Die FIG zeigt eine Sicherheitssteuerung 1 mit einer zentralen Steuereinheit 2. Die Sicherheitssteuerung 1 ist in allen Belangen derart ausgelegt, dass sie eine Sicherheitsanforderungsstufe nach der Norm IEC 61508 und der in der Praxis einfacher anzuwendenden EN ISO 13849-1 erfüllt, wobei letztere von ersterer nahezu vollständig umfasst wird. Die Steuereinheit 2 umfasst dazu im Ausführungsbeispiel zwei nicht näher gezeigte redundant ausgelegte Mikrocontroller. Die Sicherheitssteuerung 1 hat zwei Ausgänge 4, die in die Stromzufuhr zu einem nicht näher gezeigten elektrischen Verbraucher eingeschaltet sind, der Gefahrenpotential aufweist und daher sicher ausgeschaltet werden soll. Dazu sind in die Verbindung zwischen den Ausgängen 4 zwei Relais 6, 8 in Reihe geschaltet. Um den Stromfluss zu erhalten, müssen beide Relais 6, 8 im geschlossenen Zustand sein, sie sind also redundant. Die Relais 6, 8 werden von der Steuereinheit 2 gesteuert wobei jeweils einer der Mikrocontroller eines der Relais ansteuert.

Um die Funktion des elektrischen Verbrauchers im Gefahrenfall zu unterbrechen oder zumindest sicherheitsgerichtet zu beeinflussen, sind verschiedene, Meldeelemente an die Sicherheitssteuerung 1 anschließbar. Diese können z.B. Not-Aus-Schalter, Lichtschranken, Türpositionsschalter etc. sein. Zum Anschluss dieser Meldeelemente weist die Sicherheitssteuerung 1 zwei Schaltausgänge 10, 12 und drei Schalteingänge 14, 16, 18 auf.

Die Schaltausgänge 10, 12 und Schalteingänge 14, 16, 18 sind dabei mit der Steuereinheit 2 verbunden. An den Schaltausgängen 10, 12 liegen durch eine kleine positive Gleichspannung dargestellte Signale an, die logischen Zuständen entsprechen. Diese werden von einer Signalerzeugungseinheit innerhalb der Steuereinheit 2 erzeugt und an die Schaltausgänge 10, 12 übergeben. Im Ausführungsbeispiel stellt eine Spannung von +24 V einen logischen Zustand 1 dar, während ein Masseschluss, d.h. eine Spannung von 0 V einen logischen Zustand 0 darstellt. Die Schaltausgänge 10, 12 können, gesteuert durch die Steuereinheit 2, in beliebiger zeitlicher Abfolge mit den den jeweiligen logischen Zuständen entsprechenden Spannungswerten beschaltet werden. Die an den Schalteingängen 14, 16, 18 anliegenden Spannungswerte werden von der eine entsprechende Signalauswerteeinheit umfassenden Steuereinheit 2 zu einem logischen Signal ausgewertet.

In der FIG ist als Meldeelement ein Not-Aus-Schalter 20 dargestellt, der zwei redundante Kanäle mit zwei mechanisch verbundenen Schaltern 22 umfasst. Die Schalter 22 sind äquivalent, d.h. beide im Gutzustand geschlossen und im Zustand der Anforderung der Sicherheitsfunktion geöffnet. Hier ist der Not-Aus-Schalter 20 derart mit dem Sicherheitssteuerung 1 verbunden, dass Schaltausgang 10 über den einen der Schalter 22 mit Schalteingang 16 verbunden ist, Schaltausgang 12 über den anderen der Schalter 22 mit Schalteingang 18. Schalteingang 14 bleibt unbelegt. Auf den Eingangsklemmen 14, 16, 18 ergibt sich bei Freigabe somit die Signalkombination 0, 1, 1, im Zustand der Anforderung der Sicherheitsfunktion die Signalkombination 0, 0, 0. Andere Signalkombinationen deuten auf einen Fehler hin.

Das Beispiel in der FIG dient nur der Veranschaulichung der Funktionsweise der Sicherheitssteuerung 1 und ist daher stark vereinfacht. In der Realität wird das System weit komplexer sein, die Sicherheitssteuerung 1 kann modular aufgebaut sein, und es werden eine Vielzahl von Schaltein- und ausgängen vorhanden sein, die eine Vielzahl von elektrischen Verbrauchern schalten können und an die eine Vielzahl von Meldeelementen verschiedenster Art angeschlossen werden kann. Auch kann eine mehrwertige Logik verwendet werden, in der weitere Spannungswerte oder bestimmte Signalformen zur Repräsentation eines Logikwertes herangezogen werden.

Die Anschlussanordnung und damit letztlich die an den Schaltein- und -ausgängen 10, 12, 14, 16, 18 zu erwartenden Signalkombinationen müssen der Steuereinheit 2 bekannt sein, so dass sie für die jeweilige Kombination die richtige Schaltstellung für die elektrischen Verbraucher veranlasst. Dies geschieht über ein entsprechend in der Steuereinheit 2 hinterlegtes Steuerungsprogramm, welches vorab an einem nicht näher dargestellten Personalcomputer erstellt wird. Über eine serielle oder parallele Schnittstelle oder z.B. über Ethernet ist er mit der Sicherheitssteuerung 1 verbunden. Auf dem Personal Computer wird durch einen Benutzer anhand der angedachten Anschlussanordnung das Steuerungsprogramm erstellt, geprüft und anschließend in die Steuereinheit 2 der Sicherheitssteuerung 1 übertragen. Alternativ könnte beispielsweise auch eine Programmierung direkt an der Sicherheitssteuerung 1 über z.B. Wahlschalter durchgeführt werden.

Die Steuereinheit 2 ist dafür ausgelegt, während des Betriebs der Sicherheitssteuerung 1 eine Vielzahl von Diagnosedaten zu erfassen, erstellen und in ihrem internen Speicher abzuspeichern, so dass sie für die Wartung zur Verfügung stehen. So bildet die Steuereinheit 2 ein Ereignisprotokoll über alle betriebsrelavanten Ereignisse mit Zeitstempel, welches in tabellarischer Form abgespeichert wird, sowie im Falle einer Funktionsstörung eine Logdatei mit Informationen über die Funktionsstörung, die bei der Fehlersuche relevant sein können. Weitere Diagnosedaten sind denkbar.

Zum einfachen Übertragen der Diagnosedaten weist die Sicherheitssteuerung 1 weiterhin ein Modul 24 auf, welches zum Aufbau einer NFC-Verbindung ausgebildet ist. Es ist mit der Steuereinheit 2 verbunden, um die Diagnosedaten dort abrufen zu können. Bei der Wartung der Sicherheitssteuerung 1 führt ein Servicetechniker ein Smartphone als mobile Datenverarbeitungseinheit 26 auf weniger als ca. zehn cm an die Sicherheitssteuerung 1 heran. Das Smartphone ist ebenfalls für eine NFC-Kommunikation geeignet ausgelegt. Es wird eine drahtlose Verbindung 28 via NFC aufgebaut. Auf dem Smartphone ist eine App installiert, welche die nötigen Protokolle und Daten bereitstellt, damit das nicht näher gezeigte NFC-Modul des Smartphones die Sicherheitssteuerung 1 identifizieren, mit ihr in Verbindung treten und die im folgenden noch beschriebenen Funktionen ausführen kann.

Über die drahtlosen Verbindung 28 via NFC erfolgt zunächst eine Authentifizierung des Smartphones an der Sicherheitssteuerung 1. Dies kann über personalisierte, im Smartphone hinterlegte Daten erfolgen, die mit Daten in der Sicherheitssteuerung 1 abgeglichen werden, oder aber über Eingabe eines Passworts am Smartphone. Wird die Authentifizierung bestätigt, sendet die Sicherheitssteuerung 1 über die drahtlose Verbindung 28 die Diagnosedaten entweder vollständig oder nach Auswahl des Servicetechnikers am Display 30 des Smartphones selektiv an das Smartphones, wo sie beliebig weiterverarbeitet werden können.

Als weiterer Bestandteil der Diagnosedaten wird auch eine Prüfsumme übermittelt. Diese Prüfsumme wird aus dem Softwarecode des Steuerungsprogramms der Steuereinheit 2 errechnet, was entweder direkt bei der Bildung der drahtlosen Verbindung 28 oder auf Anforderung des Servicetechnikers am Display 30 des Smartphones erfolgt. Die Prüfsumme wird dann im Smartphone mit einer vorab hinterlegten Soll-Prüfsumme verglichen, wodurch die Integrität des Steuerungsprogramms der Sicherheitssteuerung 1 geprüft werden kann. Stimmen die Prüfsummen nicht überein, liegt ein Bitfehler vor.

Das gezeigte Verfahren ermöglicht eine besonders einfache und sichere Wartung der Sicherheitssteuerung 1. Durch die Verwendung des NFC-Standards werden die hohen Anforderungen an Elektromagnetische Verträglichkeit, wie sie in den genannten Normen für Sicherheitssteuerungen 1 definiert sind, erfüllt.

### Bezugszeichenliste

- 1: Sicherheitssteuerung
- 2: Steuereinheit
- 4: Schaltausgang
- 6,8: Relais
- 10, 12: Schaltausgang
- 14, 16, 18: Schalteingang
- 20: Not-Aus-Schalter
- 22: Schalter
- 24: Modul
- 26: mobile Datenverarbeitungseinheit
- 28: drahtlose Verbindung
- 30: Display

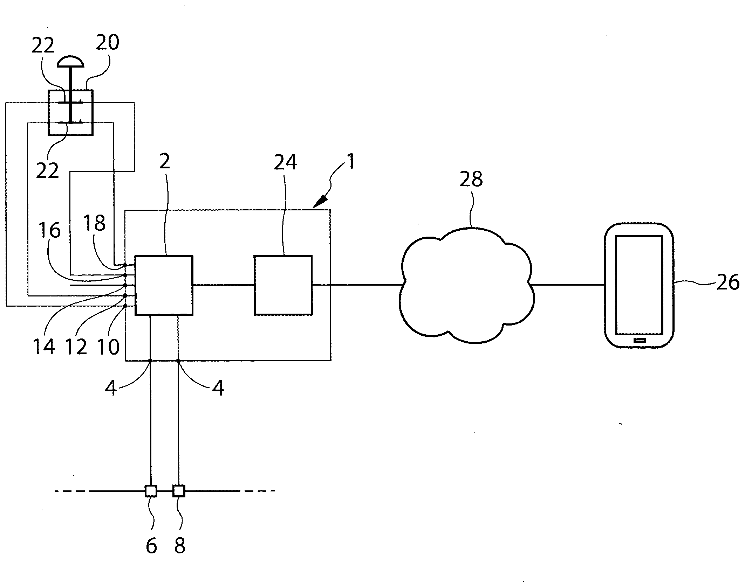

## Patentansprüche

1. Verfahren zum Auslesen von Diagnosedaten aus einer Sicherheitssteuerung (1) mittels einer mobilen Datenverarbeitungseinheit (26), wobei die Sicherheitssteuerung (1) zum sicheren Ein- und Ausschalten eines elektrischen Verbrauchers, der Gefahrenpotential für Mensch und Material birgt, gemäß einer Sicherheitsanforderungsstufe in einer Norm ausgelegt ist,
**dadurch gekennzeichnet, dass** die Diagnosedaten von der Sicherheitssteuerung (1) an die mobile Datenverarbeitungseinheit (26) mittels einer drahtlosen Verbindung (28) übertragen werden und dass die drahtlose Verbindung (28) nach dem NFC-Übertragungsstandard ausgelegt ist.

2. Verfahren nach Anspruch 1, bei dem vor der Übertragung der Diagnosedaten eine Authentifizierung der mobilen Datenverarbeitungseinheit (26) an der Sicherheitssteuerung (1) erfolgt.

3. Verfahren nach einem der vorhergehenden Ansprüche, bei dem eine Prüfsumme eines auf einem Speicher der Sicherheitssteuerung (1) hinterlegten Steuerungsprogramms gebildet wird und die Prüfsumme Bestandteil der Diagnosedaten wird.

4. Verfahren nach einem der vorhergehenden Ansprüche, bei dem ein Ereignisprotokoll der Sicherheitssteuerung (1) gebildet wird und das Ereignisprotokoll Bestandteil der Diagnosedaten wird.

5. Verfahren nach einem der vorhergehenden Ansprüche, bei dem mit einer Funktionsstörung der Sicherheitssteuerung (1) assoziierte Daten gebildet werden und die Daten Bestandteil der Diagnosedaten werden.

6. Verfahren nach einem der vorhergehenden Ansprüche, bei dem die Norm die IEC 61508, eine Nachfolgenorm oder eine Implementierung dieser Norm ist.

7. Computerprogrammprodukt, welches direkt in den internen Speicher einer mobilen Datenverarbeitungseinheit (26) geladen werden kann und Softwarecodeabschnitte umfasst, die, wenn sie auf der mobilen Datenverarbeitungseinheit (26) ausgeführt werden, diese zum Zusammenwirken in dem Verfahren nach einem der vorhergehenden Ansprüche ertüchtigen.

8. Mobile Datenverarbeitungseinheit (26) mit einem internen Speicher und einem Modul, welches zur Herstellung einer drahtlosen Verbindung nach dem NFC-Übertragungsstandard ausgelegt ist, wobei in den internen Speicher das Computerprogrammprodukt nach Anspruch 7 geladen ist.

9. Mobile Datenverarbeitungseinheit (26) nach Anspruch 8, die ein Smartphone ist.

10. Sicherheitssteuerung (1), die zum sicheren Ein- und Ausschalten eines elektrischen Verbrauchers, der Gefahrenpotential für Mensch und Material birgt, gemäß einer Sicherheitsanforderungsstufe in einer Norm ausgelegt ist, mit einer Steuereinheit (2), ausgelegt zur Erstellung von Diagnosedaten, und mit einem Modul (24), welches zur Herstellung einer drahtlosen Verbindung (28) nach dem NFC-Übertragungsstandard ausgelegt ist, wobei die Sicherheitssteuerung (1) zum Zusammenwirken in dem Verfahren nach einem der Ansprüche 1 bis 6 ausgelegt ist.

## Claims

1. A method for reading diagnostic data from a safety controller (1) by means of a mobile data processing unit (26), wherein the safety controller (1) is designed for the safe switching on and off of an electrical load which poses a potential hazard to man and material in accordance with a safety requirement level in a standard,
**characterized in that** the diagnostic data is transmitted from the safety controller (1) to the mobile data processing unit (26) by means of a wireless connection (28) and **in that** the wireless connection (28) is designed according to the NFC transmission standard.

2. The method according to claim 1, in which the mobile data processing unit (26) is authenticated at the safety controller (1) before the diagnostic data is transmitted.

3. The method according to any of the preceding claims, in which a checksum of a control program stored on a memory of the safety controller (1) is formed and the checksum becomes part of the diagnostic data.

4. The method according to any of the preceding claims, in which an event log of the safety controller (1) is formed and the event log becomes part of the diagnostic data.

5. The method according to any of the preceding claims, in which data associated with a malfunction of the safety controller (1) are formed and the data become part of the diagnostic data.

6. The method according to any of the preceding claims in which the standard is IEC 61508, a successor standard or an implementation of this standard.

7. A computer program product which can be loaded directly into the internal memory of a mobile data processing unit (26) and comprises software code sections which, when executed on the mobile data processing unit (26), enable it to cooperate in the method according to any of the preceding claims.

8. A mobile data processing unit (26) having an internal memory and a module adapted to establish a wireless connection according to the NFC transmission standard, wherein the computer program product according to claim 7 is loaded into the internal memory.

9. A mobile data processing unit (26) as claimed in claim 8, which is a smartphone.

10. A safety controller (1) designed to safely switch on and off an electrical load that poses a hazard to man and material according to a safety requirement level in a standard, comprising a control unit (2) designed to generate diagnostic data, and a module (24) designed to establish a wireless connection (28) according to the NFC transmission standard, wherein the safety controller (1) is designed to cooperate in the method according to any of claims 1 to 6.

## Revendications

1. Un procédé de lecture de données de diagnostic d'un contrôleur de sécurité (1) au moyen d'une unité mobile de traitement de données (26), dans lequel le contrôleur de sécurité (1) est conçu pour la mise sous tension ou hors tension sécurisée d'une charge électrique exposant à un danger potentiel pour les biens et personnes, suivant un niveau de sécurité standard,
**caractérisé en ce que** les données de diagnostic sont transmises depuis le contrôleur de sécurité (1) vers l'unité de traitement de données mobile (26) au moyen d'une liaison sans fil (28) et **en ce que** la liaison sans fil (28) est conforme à la norme de transmission NFC.

2. Le procédé selon la revendication 1, dans lequel l'unité mobile de traitement de données est authentifiée au niveau du contrôleur de sécurité (1) préalablement à la transmission des données de diagnostic.

3. Le procédé selon l'une des revendications précédentes, dans lequel une somme de contrôle stockée dans une mémoire du contrôleur de sécurité (1) est formée, et la somme de contrôle devient une partie des données de diagnostic.

4. Le procédé selon l'une des revendications précédentes, dans lequel un journal des événements du contrôleur de sécurité (1) est formé et le journal des événements devient une partie des données de diagnostic.

5. Le procédé selon l'une des revendications précédentes, dans lequel des données relatives à un dysfonctionnement du contrôleur de sécurité (1) sont formées et les données deviennent une partie des données de diagnostic.

6. Le procédé selon l'une des revendications précédentes, dans lequel la norme est la norme CEI 61508, une norme successeur ou une implémentation de cette norme.

7. Un programme informatique pouvant être chargé directement dans la mémoire interne d'une unité mobile de traitement de données (26) et comprenant des parties de code logiciel qui, lorsqu'elles sont exécutées par l'unité mobile de traitement de données (26), leur permettent d'interagir dans le procédé selon l'une quelconque des revendications précédentes.

8. Une unité mobile de traitement de données (26) ayant une mémoire interne et un module adapté pour l'établissement d'une liaison sans file suivant le standard de transmission NCF, dans lequel le programme information selon la revendication 7 est chargé à l'intérieur de la mémoire interne.

9. Une unité mobile de traitement de données (26) telle que revendiquée dans la revendication 8, qui est un téléphone intelligent.

10. Un contrôleur de sécurité (1) conçu pour la mise sous tension et hors tension sécurisée d'une charge électrique susceptible d'exposer les biens et personnes à un danger conformément à un niveau d'exigence de sécurité dans une norme, comprenant une unité de commande (2) conçue pour générer des données de diagnostic, et un module (24) conçu pour établir une liaison sans fil (28) suivant le standard de transmission NFR, dans lequel le contrôleur de sécurité (1) est conçu pour mettre en oeuvre le procédé selon l'une quelconque des revendications 1 à 6.
